(19)

**Europäisches Patentamt**
**European Patent Office**
**Office européen des brevets**

(11)  **EP 4 306 660 A1**

(12)  # EUROPEAN PATENT APPLICATION
published in accordance with Art. 153(4) EPC

(43) Date of publication:
**17.01.2024 Bulletin 2024/03**

(21) Application number: **22824560.1**

(22) Date of filing: **10.03.2022**

(51) International Patent Classification (IPC):
***C21B 5/00*** (2006.01)

(52) Cooperative Patent Classification (CPC):
**C21B 5/00;** Y02P 10/20

(86) International application number:
**PCT/JP2022/010733**

(87) International publication number:
**WO 2022/264561 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021 JP 2021101403**

(71) Applicant: **JFE Steel Corporation
Tokyo 100-0011 (JP)**

(72) Inventors:
• **UCHIDA, Seiji
Tokyo 100-0011 (JP)**
• **TAKAHASHI, Koichi
Tokyo 100-0011 (JP)**
• **KASHIHARA, Yusuke
Tokyo 100-0011 (JP)**
• **NOUCHI, Taihei
Tokyo 100-0011 (JP)**

(74) Representative: **Hoffmann Eitle
Patent- und Rechtsanwälte PartmbB
Arabellastraße 30
81925 München (DE)**

(54)  **OXYGEN BLAST FURNACE AND OXYGEN BLAST FURNACE OPERATION METHOD**

(57)  A high hot metal temperature is ensured even when the heat flow ratio in a lower portion of a furnace is high.

An oxygen blast furnace 1 includes a furnace body 2 into which a raw material is charged, and a tuyere 3 for injecting a blast gas and a reducing agent into the furnace body 2. The blast gas has an oxygen concentration of 50% by volume or more. A heat flow ratio $\beta$, represented by the following equation (1), in a lower portion of the furnace is 0.8 or more. The ratio (D/R) of the distance D (m) from the front end of a raceway, formed in front of the tuyere, to a furnace wall to the radius R (m) of the furnace body at the height of the tuyere satisfies the following inequation (2).

$$\beta = (C_{pig} + C_{slag} + C_{coke})/C_{gas} \qquad (1)$$

$$D/R > 0.13\beta + 0.07 \qquad (2)$$

where $C_{pig}$ is the heat capacity (W/K) of hot metal in the lower portion of the furnace, $C_{slag}$ is the heat capacity (W/K) of slag in the lower portion of the furnace, $C_{coke}$ is the heat capacity (W/K) of coke in the lower portion of the furnace, and $C_{gas}$ is the heat capacity (W/K) of reducing gas in the lower portion of the furnace.

EP 4 306 660 A1

**(Cont. next page)**

# FIG. 1

**Description**

Technical Field

The present invention relates to an oxygen blast furnace into which oxygen is injected through tuyeres and which generates, at its top, a blast furnace gas having a low nitrogen content, and to a method for operating the oxygen blast furnace.

Background Art

These days, blast furnaces are directed toward consolidation of the number of operating furnaces, reduction in their sizes for alleviating restrictions on raw materials, etc., and are required to have higher productivity. Therefore, it is necessary to operate a blast furnace at a high productivity. The productivity refers to a value obtained by dividing the amount of tapped hot metal, produced per day by one blast furnace, by the internal volume of the blast furnace (the volume from the tuyere level to the stock line level in the blast furnace), and is used as an indicator of the efficiency of the blast furnace. Further, with global environmental problems as a backdrop, steel mills are strongly required to save energy and resources and to reduce the generation of carbon dioxide ($CO_2$) gas. Therefore, low reducing-agent-ratio (low RAR) operations are strongly promoted in blast furnaces these days.

A common blast furnace performs an operation which involves injecting high-temperature air, generated in a hot stove, into the furnace through tuyeres. Such a common blast furnace is called a hot blast furnace. In a hot blast furnace, oxygen enrichment on the order of a few vol % is sometimes performed in order to increase productivity. However, the concentration of nitrogen in front of each tuyere is as high as about 50 vol %, and nitrogen does not directly contribute to the reduction of iron ore. Accordingly, the productivity of a hot blast furnace is at most about 2.0 to 3.0 t/day·m$^3$.

On the other hand, an oxygen blast furnace is known which enables a high-productivity operation by injecting pure oxygen at room temperature into the furnace through tuyeres (see, for example, Patent Literatures 1 and 3). Since the blast gas of an oxygen blast furnace does not contain nitrogen, the concentration of reducing gas is high. Therefore, the amount of reducing gas required to produce one ton of hot metal can be reduced, and the ratio of the heat capacity of the burden to the heat capacity of furnace gas (hereinafter termed the heat flow ratio) can be increased. This makes it possible to achieve a higher productivity (e.g., 4.0 to 6.0 t/day·m$^3$) than a hot blast furnace.

In an operation at a high heat flow ratio, transfer of heat from the blast gas to the burden is retarded, whereby the temperature in the furnace decreases. In an oxygen blast furnace, the heat flow ratio is high throughout the furnace. When the heat flow ratio is high in a lower portion of the furnace, transfer of heat from the blast gas to hot metal may be insufficient, resulting in a decrease in the temperature of hot metal. A method has been proposed which ensures a high hot metal temperature even in an oxygen blast furnace having a high heat flow ratio in a lower portion of the furnace, as disclosed in Patent Literature 3. Further, a technique is known which controls a furnace heat by adjusting a raceway depth or a tuyere projection distance as disclosed in Non Patent Literature 1 and Patent Literature 2, though the technique is not for an oxygen blast furnace but for a hot blast furnace.

Non Patent Literature 1 discloses a technique which involves increasing the velocity of blast air at each tuyere of a hot blast furnace to increase the depth of a raceway, thereby reducing a decrease in the temperature at the deadman. Patent Literature 2 discloses a technique which involves increasing a tuyere projection distance in a hot blast furnace, thereby reducing a decrease in the temperature at the deadman without increasing the depth of a raceway. Patent Literature 3 discloses a technique which involves injecting a preheated gas from a shaft portion of an oxygen blast furnace, thereby controlling the furnace heat.

Citation List

Patent Literature

PTL 1: Japanese Unexamined Patent Application Publication No. 60-159104
PTL 2: Japanese Unexamined Patent Application Publication No. 2007-046145
PTL 3: Japanese Unexamined Patent Application Publication No. 63-171809

Non Patent Literature

NPL 1: Y. Matsui, M. Shimizu, K. Nozawa, K. Shibata and R. Ito: CAMP-ISIJ, 12 (1999), 632.

Summary of Invention

Technical Problem

The techniques described in Non Patent Literature 1 and Patent Literature 2 are for use in a hot blast furnace; the techniques enable control of a furnace heat when the heat flow ratio in a lower furnace portion is low as in a hot blast furnace. It is conceivable that the techniques can improve the efficiency of heat transfer to hot metal to some extent. However, the techniques of Non Patent Literature 1 and Patent Literature 2, which are mainly directed to control of a furnace heat such as a deadman temperature, will not significantly improve the efficiency of heat transfer to hot metal. Furthermore, the techniques of Non Patent Literature 1 and Patent Literature 2, which are solely targeted at a blast furnace having a low heat flow ratio in a lower portion thereof, will not achieve a sufficient effect of improving the heat transfer efficiency when applied to a blast furnace having a high heat flow ratio in a lower portion thereof, such as an oxygen blast furnace. As will be appreciated from the foregoing, the use of the techniques of Non Patent Literature 1 and Patent Literature 2 in an oxygen blast furnace cannot obtain a high hot metal temperature comparable to that of a hot blast furnace. The technique disclosed in Patent Literature 3 is for use in an oxygen blast furnace, and can reduce the heat flow ratio in the vicinity of a shaft portion, i.e., in an upper portion of the furnace. However, the heat flow ratio remains high in a lower portion of the furnace. Therefore, the efficiency of heat transfer to hot metal cannot be sufficiently improved, and a high hot metal temperature comparable to that of a hot blast furnace cannot be obtained.

The present invention has been made in view of the above problems. It is therefore an object of the present invention to provide an oxygen blast furnace and a method for operating the oxygen blast furnace, which can ensure a high hot metal temperature even when the heat flow ratio in a lower portion of the furnace is high.

Solution to Problem

[1] An oxygen blast furnace including a furnace body into which a raw material is charged, and a tuyere for injecting a blast gas and a reducing agent into the furnace body,

wherein the blast gas has an oxygen concentration of 50% by volume or more,
wherein a heat flow ratio $\beta$, represented by the following equation (1), in a lower portion of the furnace is 0.8 or more, and
wherein the ratio (D/R) of the distance D (m) from the front end of a raceway, formed in front of the tuyere, to a furnace wall to the radius R (m) of the furnace body at the height of the tuyere satisfies the following inequation (2):

$$\beta \;=\; (C_{pig} \;+\; C_{slag} \;+\; C_{coke})/C_{gas} \qquad (1)$$

$$D/R \;>\; 0.13\beta \;+\; 0.07 \qquad (2)$$

where $C_{pig}$ is the heat capacity (W/K) of hot metal in the lower portion of the furnace, $C_{slag}$ is the heat capacity (W/K) of slag in the lower portion of the furnace, $C_{coke}$ is the heat capacity (W/K) of coke in the lower portion of the furnace, and $C_{gas}$ is the heat capacity (W/K) of reducing gas in the lower portion of the furnace.

[2] The oxygen blast furnace as set forth in [1], wherein the ratio D/R satisfies the following inequation (3) :

$$D/R \;>\; 0.15\beta \;+\; 0.07 \qquad (3)$$

[3] The oxygen blast furnace as set forth in [1] or [2], wherein the heat flow ratio $\beta$ in the lower portion of the furnace is 1.4 or less.
[4] The oxygen blast furnace as set forth in any one of [1] to [3], wherein the ratio D/R is 0.30 or less.
[5] The oxygen blast furnace as set forth in any one of [1] to [4], wherein the temperature of hot metal tapped from the furnace body is higher than 1520°C.
[6] A method for operating an oxygen blast furnace, including performing an operation using the oxygen blast furnace as set forth in any one of [1] to [5].

Advantageous Effects of Invention

According to the oxygen blast furnace and the oxygen blast furnace operating method of the present invention, a high hot metal temperature can be ensured, even when the heat flow ratio $\beta$ in a lower portion of the furnace is 0.8 or more, by making the ratio D/R of the distance D from the front end of a raceway, formed in front of the tuyere, to a furnace wall to the radius R of the furnace body at the height of the tuyere fall within the range defined by the inequation (2).

Brief Description of Drawings

[Fig. 1] Fig. 1 is a perspective view illustrating a preferred embodiment of an oxygen blast furnace according to the present invention.
[Fig. 2] Fig. 2 is a schematic view illustrating an example of a device for performing a model experiment for the oxygen blast furnace of Fig. 1.
[Fig. 3] Fig. 3 is a graph showing the relationship between the heat transfer efficiency $\eta$ and the ratio D/R, determined by the model experiment.

Description of Embodiments

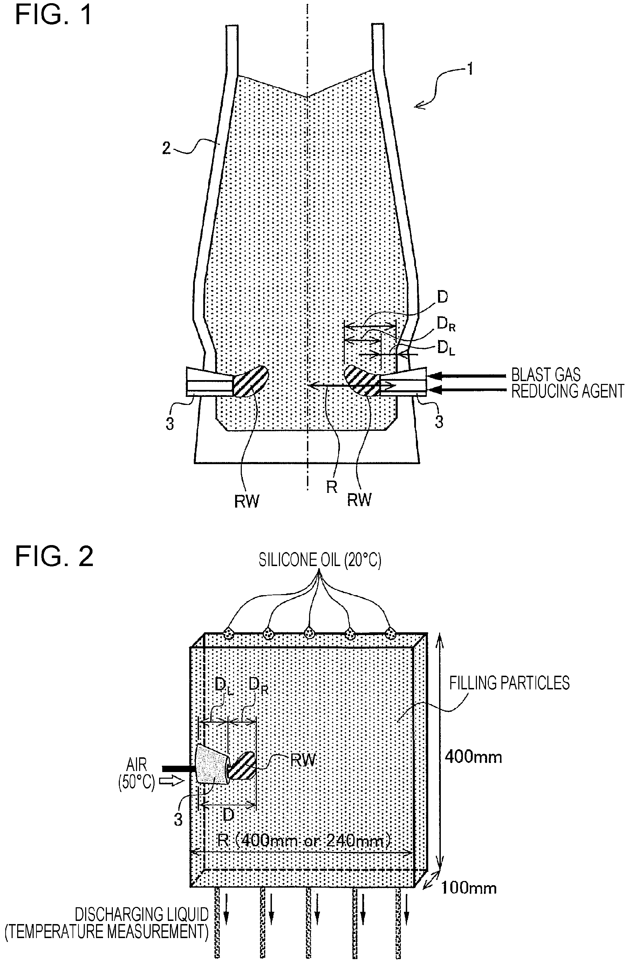

Embodiments of the present invention will now be described with reference to the drawings. Fig. 1 is a perspective view illustrating a preferred embodiment of an oxygen blast furnace according to the present invention. An oxygen blast furnace 1 of Fig. 1 includes a furnace body 2 into which raw materials are charged, and tuyeres 3 for injecting a blast gas and a reducing agent into the furnace body 2. Raw materials such as sintered ore, iron ore, coke, limestone, and pellets are charged from the top of the furnace into the furnace body 2.
The tuyeres 3 are provided in a bosh portion of the furnace body 2, which is a lower portion of the furnace. The blast gas and the reducing agent are injected through the tuyeres 3 into the furnace body 2. When the blast gas and the reducing agent are injected through the tuyeres 3, a raceway RW is formed in front of each tuyere 3. The blast gas has an oxygen concentration of 50% by volume or more, preferably 100%. Oxygen in the blast gas reacts with coke in the furnace or the reducing agent injected through the tuyeres 3 to form CO gas, and the CO gas reduces iron ore. In order to adjust the temperature of an area in front of each tuyere tip to an appropriate temperature, natural gas, propane gas, coke oven gas (C gas), biogas, or the like may be injected together with pure oxygen.
The reducing agent is composed of a solid reducing agent or a gaseous reducing agent, or a mixture of a solid reducing agent and a gaseous reducing agent. There is no particular limitation on the reducing agent as long as it has a reducing action; for example, pulverized coal or waste plastic, in a particulate or powdery form, may be used. When a gaseous reducing agent is used as the reducing agent, it is not particularly limited as long as it has a reducing action. For example, carbon monoxide, hydrogen, a hydrocarbon such as methane, or an alcohol such as methanol is preferably used. The use of a hydrocarbon such as methane is particularly preferred. This is because a hydrocarbon generates heat when it reacts with $O_2$ to form CO, and therefore the reducing agent ratio (RAR) of the blast furnace can be reduced.
In order to reduce the amount of the blast gas required to produce 1 ton of hot metal and obtain a high productivity, it is necessary to make the heat flow ratio $\beta$ in the lower portion of the furnace 0.8 or more. The heat flow ratio $\beta$ in the lower portion of the furnace can be represented by the following equation (1). The heat flow ratio $\beta$ is preferably 1.4 or less. When the heat flow ratio $\beta$ exceeds 1.4, it is necessary to make the ratio D/R of the below-described inequation (2) exceed 0.25. If the ratio D/R exceeds 0.25, the velocity of gas rising in the furnace increases, resulting in a reduction in gas permeability.

$$\beta = (C_{pig} + C_{slag} + C_{coke})/C_{gas} \qquad (1)$$

where

$C_{pig}$: Heat capacity (W/K) of hot metal in the lower portion of the furnace
$C_{slag}$: Heat capacity (W/K) of slag in the lower portion of the furnace
$C_{coke}$: Heat capacity (W/K) of coke in the lower portion of the furnace
$C_{gas}$: Heat capacity (W/K) of reducing gas in the lower portion of the furnace

In addition to the heat flow ratio $\beta$ of 0.8 or more, it is necessary to make the oxygen concentration 50% by volume or more in order to obtain a high productivity. In general, when the productivity is increased, the time during which a burden stays in the furnace decreases, and therefore the time for performing a reduction reaction of iron ore in the furnace decreases. Therefore, if the productivity is intended to increase at an oxygen concentration of less than 50% by volume without increasing the reduction rate of iron ore, the reduction of iron ore will be insufficient. The reduction rate of iron ore is increased by increasing the oxygen concentration to 50% by volume or more. This makes it possible to sufficiently reduce iron ore even when the time during which the iron ore stays in the furnace is reduced. Thus, the productivity is increased while increasing the oxygen concentration to 50% by volume or more to increase the reduction rate.

Furthermore, the ratio D/R of the distance D (m) from the front end of the raceway RW to the furnace wall to the radius R (m) of the furnace body at the height position of the tuyere 3 is made to fall within the range defined by the below-described inequation (2). When the ratio (D/R) is within the below-described range, a high hot metal temperature can be obtained even when the heat flow ratio $\beta$ in the lower portion of the furnace is 0.8 or more. The ratio D/R is more preferably within the range defined by the below-described inequation (3). The distance D is the sum of the depth $D_R$ (m) of the raceway RW and the length $D_L$ (m) of the tuyere 3 projecting from the furnace wall (D = $D_R$ + $D_L$).

$$D/R > 0.13\beta + 0.07 \qquad (2)$$

$$D/R > 0.15\beta + 0.07 \qquad (3)$$

A method for deriving the above inequations (2) and (3) will now be described. First, a dimensionless hot metal temperature $\theta_{pig,out}$, a heat transfer efficiency $\eta$, and the amount of heat $H_{gas}$ brought by gas are defined by the following equations (4) to (6).

$$\theta_{pig,out} = (T_{pig,out} - T_{pig,in})/(T_{gas,in} - T_{pig,in}) \qquad (4)$$

$$\eta = H_{pig,slag,coke}/H_{gas} \qquad (5)$$

$$H_{gas} = C_{gas} \times (T_{gas,in} - T_{pig,in}) \qquad (6)$$

where

$T_{pig,out}$: Temperature (°C) of tapped hot metal
$T_{pig,in}$: Temperature (°C) of hot metal at the start of dropping of it
$T_{gas,in}$: Temperature (°C) of a gas generated in front of each tuyere by a combustion reaction between the blast gas supplied through the tuyere and the reducing agent and coke
$H_{pig,slag,coke}$: Total amount of heat (W) transferred from the blast gas to hot metal, slag, and coke
$H_{gas}$: Amount of heat (W) brought by the gas generated in front of each tuyere

Assuming that the temperature of slag and coke is approximately equal to the temperature of hot metal, the total amount of heat transfer $H_{pig,slag,coke}$ (W) can be represented by the following equation (7).

$$H_{pig,slag,coke} = (C_{pig} + C_{slag} + C_{coke}) \times (T_{pig,out} - T_{pig,in}) \qquad (7)$$

From the inequation (2) and the equations (4) to (7), the relationship between the dimensionless hot metal temperature $\theta_{pig,out}$, the heat transfer efficiency $\eta$, and the heat flow ratio $\beta$ in the lower portion of the furnace can be expressed by the following equation (8).

$$\theta_{pig,out} = \eta/\beta \qquad (8)$$

A high hot metal temperature $T_{pig,out}$ herein refers to a hot metal temperature of more than 1520°C, preferably more than 1540°C. When the hot metal temperature $T_{pig,out}$ > 1520°C, it is possible to reduce a decrease in the productivity due to an increase in the viscosity of hot metal and slag. In order to make the hot metal temperature $T_{pig,out}$ > 1520°C when $T_{pig,in}$ = 1400°C and $T_{gas,in}$ = 2000°C, which are common operating conditions of the oxygen blast furnace 1, it is necessary to make the dimensionless hot metal temperature $\theta_{pig,out}$ > 0.20 as can be derived from the equation (4). This means that the heat transfer efficiency $\eta$ needs to be increased so as to satisfy $\eta/\beta$ > 0.20 in the equation (8). In the case of the hot metal temperature $T_{pig,out}$ > 1540°C, it corresponds to the dimensionless hot metal temperature $\theta_{pig,out}$ > 0.23; $\eta/\beta$ > 0.23 should be satisfied.

Next, operating conditions for obtaining a heat transfer efficiency $\eta$ that satisfies $\eta/\beta$ > 0.20 when the heat flow ratio $\beta \geq 0.8$ were determined based on a model experiment. The model experiment was conducted in the following manner. An acrylic container, simulating the lower portion of the oxygen blast furnace 1, was prepared. The dimensions of the acrylic container were 400 mm or 240 mm in width, 100 mm in depth, and 400 mm in height. Since the acrylic container is a rectangular parallelepiped, the furnace body radius R at the height of a tuyere is 240 mm or 400 mm. In order to simulate coke particles which have been deposited and remain motionless in the furnace, the acrylic container was filled with polyethylene particles having a diameter of 4 mm. A tuyere was attached to a side surface of the acrylic container, and air ($T_{gas,in}$ = 50°C) was supplied through the tuyere into the container. Further, silicone oil ($T_{pig,in}$ = 20°C) was supplied as a material simulating hot metal, slag, and coke which are supplied from the top of the furnace. While the three types of materials, namely hot metal, slag, and coke, are supplied in the actual oxygen blast furnace 1, in this experiment all of them were simulated by the silicone oil on the assumption that the temperature of slag and coke is approximately equal to the temperature of hot metal.

In the model experiment, the flow rate of gas and the flow rate of silicone oil were set so that the heat flow ratio $\beta$ in a lower portion of the acrylic container was 0.6 to 1.4, whereby the phenomena at the heat flow ratio $\beta$ of 0.8 or more in the lower portion of the actual oxygen blast furnace could be reproduced. The distance D was calculated by adding the length $D_L$ of the tuyere 3 to the depth $D_R$ of a raceway RW formed in front of the tuyere during the experiment. In order to change the value of the depth $D_R$ of the raceway RW, an experiment was also conducted under the condition that a wire mesh was installed in front of the tuyere to form a simulated raceway RW. The experimental results are shown in Table 1 below.

[Table 1]

| Experimental results | 1 | 2 | 3 | 4 | 5 | 6 |
|---|---|---|---|---|---|---|
| Heat flow ratio $\beta$ | 1.32 | 1.32 | 1.32 | 0.66 | 0.66 | 0.66 |
| Radius R ($\times 10^{-3}$ m) | 0.40 | 0.24 | 0.40 | 0.40 | 0.24 | 0.40 |
| Distance D ($\times 10^{-3}$ m) | 0.06 | 0.06 | 0.15 | 0.08 | 0.08 | 0.16 |
| Ratio D/R | 0.15 | 0.25 | 0.38 | 0.20 | 0.33 | 0.40 |
| Heat transfer efficiency $\eta$ | 0.15 | 0.26 | 0.49 | 0.23 | 0.28 | 0.60 |

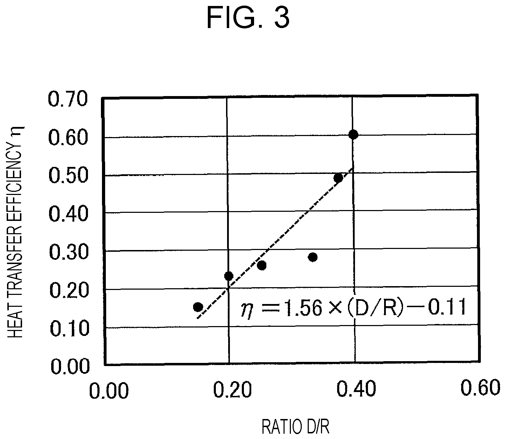

Referring to Table 1, the temperature $T_{pig,out}$ of silicone oil, flowing out from the bottom of the container, was measured in the model experiment, and the heat transfer efficiency $\eta$ was calculated using the above equations (5) and (6). Fig. 3 is a graph showing the relationship between $\eta$ and the ratio D/R, determined by the model experiment. A relationship represented by the following equation (9) was obtained from the graph.

$$\eta = 1.56 \times (D/R) - 0.11 \qquad (9)$$

The above inequation (2) can be obtained from the equation (9) and the relational expression $\eta/\beta$ > 0.20. Further, the inequation (3) can be obtained from the expression (9) and the relational expression $\eta/\beta$ > 0.23.

The ratio D/R is preferably 0.30 or less, more preferably 0.25 or less. This is because if the D/R ratio is too high, the velocity of gas rising in the furnace increases, resulting in a reduction in gas permeability.

By setting the ratio D/R during operation of the oxygen blast furnace 1 so that the inequation (2) or (3) thus obtained is satisfied, a high hot metal temperature can be ensured even when $\beta$ is 0.8 or more. The ratio D/R is changed by adjusting any one of the furnace body radius R, the length $D_L$ of the tuyere 3, and the raceway depth $D_R$. In particular, when the ratio D/R is controlled by adjusting the raceway depth $D_R$, the adjustment may be performed, e.g., by controlling the flow rate of the blast gas and the reducing agent, injected through the tuyere 3 into the furnace, as follows.

First, the raceway depth $D_R$ in the oxygen blast furnace 1 is calculated by the following equation (10), where $D_T$ (m) is the diameter of the tuyere and Fr is the Froude number.

$$D_R/D_T = 0.521 \times (Fr)^{0.8} \qquad (10)$$

The Froude number Fr is represented by the following equation (11).

$$Fr = (\rho f/\rho P)^{1/2} \times U/(g \times d)^{1/2} \qquad (11)$$

In the above equation (11), $\rho f$ is a bosh gas density (kg/m³), which is the density of a high-temperature gas, $\rho P$ is the apparent density (kg/m³) of coke particles, U is a bosh gas flow velocity (m/sec), d is the harmonic mean particle diameter (m) of coke particles, and g is gravitational acceleration (= 9.81 m/sec²). The bosh gas flow velocity U (m/sec) in the equation (11) is calculated by the following equation (12).

$$U = V/(\pi \times D_T^2/4) \qquad (12)$$

In the above equation (12), V is a bosh gas flow rate (m³/sec) at each tuyere, and is a volumetric flow rate as calculated on the assumption that the blast gas and the reducing agent, injected through the tuyere 3 into the raceway RW, and coke in front of the tuyere 3 are burned in the raceway RW and cause a gasification reaction to form a high-temperature gas composed solely of CO, $H_2$, and $N_2$.

In the equations (11) and (12), the bosh gas flow rate V and the bosh gas density $\rho f$ can be calculated if the temperature, composition, and flow rate of the blast gas and the reducing agent, injected through the tuyere 3, the amount of heat generated upon the change to the bosh gas, and the pressure in the raceway RW are known. The pressure in the raceway RW can be replaced by a measured value of an in-furnace pressure gauge installed at the height of the tuyere 3. Alternatively, a value, obtained by subtracting a calculated pressure loss in a flow path of the blast gas to the tuyere 3 from the original pressure of the blast gas flowing into the tuyere 3, may be used as the pressure in the raceway RW. The apparent density $\rho P$ of coke particles can be measured using the Le Chatelier pycnometer method, a submerged weighing method, or a simplified Archimedes method.

In operating the oxygen blast furnace of Fig. 1, the raceway depth $D_R$ is calculated based on the equations (10) to (12), and the ratio D/R is determined using the calculated raceway depth $D_R$ and known values of the furnace body radius R and the projecting length $D_L$ of the tuyere 3. For example, the flow rate of the blast gas and the reducing agent, injected through the tuyere 3, is adjusted so that the determined ratio D/R satisfies the inequation (2) or (3). Such a method for operating the oxygen blast furnace makes it possible to ensure a high hot metal temperature even when the heat flow ratio $\beta$ in the lower portion of the furnace is 0.8 or more.

Example 1

Table 2 below shows the hot metal temperature $T_{pig,out}$ as determined when the oxygen concentration, the heat flow ratio $\beta$ in the lower portion of the furnace, the distance D, and the furnace body radius R are changed in the above model experiment.

[Table 2]

| | Inventive Example 1 | Inventive Example 2 | Inventive Example 3 | Inventive Example 4 | Comp. Example 1 | Comp. Example 2 | Comp. Example 3 | Comp. Example 4 | Comp. Example 5 | Comp. Example 6 | Comp. Example 7 |
|---|---|---|---|---|---|---|---|---|---|---|---|
| Oxygen concentration of blast | 100% | 100% | 100% | 60% | 23% | 100% | 100% | 100% | 40% | 60% | 40% |
| Production rate (t/day) | 8000 | 8000 | 8000 | 8000 | 8000 | 8000 | 8000 | 8000 | 8000 | 8000 | 8000 |
| Heat flow ratio $\beta$ | 0.95 | 0.95 | 0.95 | 0.84 | 0.66 | 0.95 | 0.95 | 0.95 | 0.77 | 0.66 | 0.95 |
| Radius R (m) | 4.9 | 4.2 | 5.6 | 5.6 | 7.0 | 7.0 | 5.6 | 7.0 | 7.0 | 7.0 | 7.0 |
| Distance D (m) | 1.0 | 1.0 | 1.3 | 1.2 | 1.3 | 1.0 | 1.0 | 1.3 | 1.3 | 1.3 | 1.3 |
| Ratio D/R | 0.2 | 0.24 | 0.23 | 0.21 | 0.19 | 0.14 | 0.18 | 0.19 | 0.19 | 0.19 | 0.21 |
| Heat transfer efficiency $\eta$ | 0.21 | 0.26 | 0.25 | 0.22 | 0.18 | 0.11 | 0.17 | 0.18 | 0.18 | 0.18 | 0.22 |
| Dimensionless hot metal temperature $\theta_{pig,out}$ | 0.219 | 0.275 | 0.265 | 0.267 | 0.272 | 0.119 | 0.177 | 0.189 | 0.233 | 0.272 | 0.214 |
| Hot metal temperature $T_{pig,out}$ (°C) | 1532 | 1565 | 1559 | 1560 | 1563 | 1471 | 1506 | 1514 | 1540 | 1563 | 1514 |
| Oxygen concentration [pass/fail] | ○ | ○ | ○ | ○ | × | ○ | ○ | ○ | × | ○ | × |
| $\beta$ [pass/fail] | ○ | ○ | ○ | ○ | × | ○ | ○ | ○ | × | × | ○ |
| Inequation (2) [pass/fail] | ○ | ○ | ○ | ○ | ○ | × | × | × | ○ | ○ | × |
| Inequation (3) [pass/fail] | × | ○ | ○ | ○ | ○ | × | × | × | ○ | ○ | × |
| ○: pass ×: fail | | | | | | | | | | | |

In Table 1, Examples 1 to 4 fall within the scope of the present invention. In these Examples, a hot metal temperature $T_{pig,out}$ of 1520°C or more could be obtained even though the heat flow ratio $\beta$ was 0.8 or more. On the other hand, in Comparative Example 1 whose specifications are those of a hot blast furnace, the heat flow ratio $\beta$ in the lower furnace portion was less than 0.8 due to the oxygen concentration of the blast gas of less than 50% by volume, resulting in a failure to obtain a high productivity. In Comparative Example 5, the oxygen concentration was made to be higher than that of a hot blast furnace, but was still less than 50% by volume. Therefore, the heat flow ratio $\beta$ in the lower furnace portion was less than 0.8, resulting in a failure to obtain a high productivity. In Comparative Examples 2 to 4 whose specifications are those of an oxygen blast furnace, the heat flow ratio $\beta$ in the lower furnace portion was made to be 0.8 or more. However, the ratio D/R did not satisfy the inequation (2), and the hot metal temperature $T_{pig,out}$ was less than 1520°C. In Comparative Example 6, the oxygen concentration was 50% by volume or more and the hot metal temperature $_{pig,out}$ was 1520°C or more. However, the heat flow ratio $\beta$ in the lower furnace portion was less than 0.8, resulting in a failure to obtain a high productivity. While the heat flow ratio $\beta$ in the lower furnace portion was 0.8 or more in Comparative Example 7, the oxygen concentration was less than 50% by volume, resulting in a failure to obtain a high productivity. Further, since the production rate could not be increased any more in Comparative Example 7, the furnace body radius R could not be reduced to a range that satisfies the inequation (2), resulting in a failure to obtain a hot metal temperature $T_{pig,out}$ of 1520°C or more.

Reference Signs List

1 oxygen blast furnace
2 furnace body
3 tuyere
D distance
D/R ratio
R furnace body radius
RW raceway
$T_{pig,out}$ hot metal temperature
$\beta$ heat flow ratio in lower furnace portion
$\eta$ heat transfer efficiency

**Claims**

1. An oxygen blast furnace comprising a furnace body into which a raw material is charged, and a tuyere for injecting a blast gas and a reducing agent into the furnace body,

   wherein the blast gas has an oxygen concentration of 50% by volume or more,
   wherein a heat flow ratio $\beta$, represented by the following equation (1), in a lower portion of the furnace is 0.8 or more, and
   wherein a ratio (D/R) of a distance D (m) from a front end of a raceway, formed in front of the tuyere, to a furnace wall to a radius R (m) of the furnace body at a height of the tuyere satisfies the following inequation (2):

$$\beta = (C_{pig} + C_{slag} + C_{coke})/C_{gas} \qquad (1)$$

$$D/R > 0.13\beta + 0.07 \qquad (2)$$

   where $C_{pig}$ is a heat capacity (W/K) of hot metal in the lower portion of the furnace, $C_{slag}$ is a heat capacity (W/K) of slag in the lower portion of the furnace, $C_{coke}$ is a heat capacity (W/K) of coke in the lower portion of the furnace, and $C_{gas}$ is a heat capacity (W/K) of reducing gas in the lower portion of the furnace.

2. The oxygen blast furnace according to claim 1, wherein the ratio D/R satisfies the following inequation (3):

$$D/R > 0.15\beta + 0.07 \qquad (3)$$

3. The oxygen blast furnace according to claim 1 or 2, wherein the heat flow ratio $\beta$ in the lower portion of the furnace is 1.4 or less.

4. The oxygen blast furnace according to any one of claims 1 to 3, wherein the ratio D/R is 0.30 or less.

5. The oxygen blast furnace according to any one of claims 1 to 4, wherein a temperature of hot metal tapped from the furnace body is higher than 1520°C.

6. A method for operating an oxygen blast furnace, comprising performing an operation using the oxygen blast furnace according to any one of claims 1 to 5.

FIG. 1

FIG. 2

# FIG. 3

$\eta = 1.56 \times (D/R) - 0.11$

<div style="text-align:center">**INTERNATIONAL SEARCH REPORT**</div>

| International application No. |
|---|
| **PCT/JP2022/010733** |

| A. | CLASSIFICATION OF SUBJECT MATTER |
|---|---|

*C21B 5/00*(2006.01)i
FI:   C21B5/00 316

According to International Patent Classification (IPC) or to both national classification and IPC

| B. | FIELDS SEARCHED |
|---|---|

Minimum documentation searched (classification system followed by classification symbols)

C21B5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | 大野陽太郎　他, 酸素高炉法のプロセス特性（酸素高炉プロセスの開発－ 7） Effect of blast conditions on Oxygen blast furnace process (Development of Oxygen blast furnace process-7). 材料とプロセス Current Advances in Materials and Processes : Report of the ISIJ Meeting, 1989, vol. 2, no. 1, p. 101, ISSN: 0914-6628, in particular, lines 1-12, fig. 1<br>lines 1-12, fig. 1, (ONO, Yotaro et al.) | 1-6 |
| Y | JP 2007-46145 A (NIPPON STEEL CORP) 22 February 2007 (2007-02-22)<br>claims, paragraphs [0007]-[0008], [0018]-[0022], [0030]-[0031], [0056]-[0057], fig. 2-3, 7-8 | 1-6 |
| A | JP 2003-247008 A (JFE STEEL KK) 05 September 2003 (2003-09-05)<br>entire text | 1-6 |
| A | JP 2011-246757 A (SUMITOMO METAL IND LTD) 08 December 2011 (2011-12-08)<br>entire text | 1-6 |
| A | JP 2008-111172 A (JFE STEEL KK) 15 May 2008 (2008-05-15)<br>entire text | 1-6 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div style="text-align:center">14</div>

**INTERNATIONAL SEARCH REPORT**

| International application No. |
| --- |
| **PCT/JP2022/010733** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-99150 A (KOBE STEEL LTD) 19 May 2011 (2011-05-19)<br>entire text | 1-6 |

INTERNATIONAL SEARCH REPORT
Information on patent family members

International application No.

**PCT/JP2022/010733**

| Patent document cited in search report | | | Publication date (day/month/year) | Patent family member(s) | Publication date (day/month/year) |
|---|---|---|---|---|---|
| JP | 2007-46145 | A | 22 February 2007 | (Family: none) | |
| JP | 2003-247008 | A | 05 September 2003 | (Family: none) | |
| JP | 2011-246757 | A | 08 December 2011 | (Family: none) | |
| JP | 2008-111172 | A | 15 May 2008 | (Family: none) | |
| JP | 2011-99150 | A | 19 May 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60159104 A
- JP 2007046145 A
- JP 63171809 A

**Non-patent literature cited in the description**

- **Y. MATSUI ; M. SHIMIZU ; K. NOZAWA ; K. SHIBATA ; R. ITO.** *CAMP-ISIJ,* 1999, vol. 12, 632